# EUROPEAN PATENT SPECIFICATION

(11) **EP 1 366 102 B1**
(45) Date of publication and mention of the grant of the patent: **22.09.2004**
(21) Application number: 01998578.7
(22) Date of filing: 25.10.2001
(51) Int. Cl.: C08G 59/40, C08G 65/00

(54) **HYDROXYL-GROUP-CONTAINING POLYETHER AMINE ADDUCTS**
HYDROXYLGRUPPEN ENTHALTENDE POLYETHER-AMIN-ADDUKTE
ADDUITS D'AMINE POLY THER CONTENANT UN GROUPE HYDROXYLE

(30) Priority: 21.11.2000 DE 10057511
(43) Date of publication of application: 03.12.2003
(73) Proprietor: Huntsman Advanced Materials (Switzerland) GmbH, 4057 Basel (CH)
(72) Inventor: SCHERZER, Wolfgang, 59192 Bergkamen (DE); VOLLE, Jörg, 59379 Selm/Bork (DE)
(74) Representative: Maué, Paul Georg
(86) International application number: PCT/EP2001/012371
(87) International publication number: WO 2002/044240

(56) References cited:
- US-A- 3 847 726
- US-A- 4 281 199

## Description

The invention relates to hydroxyl-group-containing polyether amine adducts, to a curable composition comprising such adducts as formulation components for curable compositions which, especially through the use of those long-chain adducts as curing agents for epoxy resins, yield lightly crosslinked, elastic thermosets that are resistant to chemicals, and also to the use of those curable compositions for the manufacture of mouldings and coverings.

Epoxy resins have long been widely used for the manufacture of anticorrosive paints, abrasion-resistant coatings, sealing compounds and adhesives that exhibit excellent mechanical strength and have a good resistance to chemicals. Owing to their high crosslink density, amine-cured epoxy resins, especially those based on diphenyl propane and epichlorohydrin, have a brittle hardness with glass transition ranges above 20°C.

The high degree of hardness and high strength of amine-cured epoxy resins are not always necessary in practice, while at the same time an elasticisation and reduction in brittleness are frequently desirable. Various methods have been used for that purpose hitherto, but those methods have not always been satisfactory.

In principle, the degree of elasticisation can be increased internally by reducing the crosslink density and increased externally by the addition of plasticiser.

External elasticisation agents are not reactive and are not incorporated into the thermoset network. They cause an expansion of the network merely by filling up space. External plasticisers include tar, phthalic acid esters, high-boiling alcohols, glycols, ketone resins, vinyl polymers and similar products that are not reactive with epoxy resins and amine curing agents. Modification of that kind is suitable only for certain applications. It makes virtually no contribution towards elasticisation at all, since the glass softening range is only marginally affected, but seriously interferes with the thermoset structure.
An internal elasticisation of epoxy resins can be achieved by reducing the functionality of the curing agent, as is described, for example, in DE-A 22 00 717.

Long-chain, low-functional aminoamides based on dimeric and trimeric fatty acids, which have a satisfactory property profile as soft curing agents of epoxy resins, have been widely used for a long time, but because of certain shortcomings they are not as suitable for universal use as might be desired.

Also known, from DE-A 10 90 803, is the modification of such systems by the co-use of polyurethanes. That was further developed in the direction of elasticised plastics by the process described in DE-A 21 52 606.

DE-C 24 18 041 discloses a process for the manufacture of elasticised mouldings and sheet materials in which the urethane-group-containing polyether amines described in DE-C 24 62 791 are co-used as curing agents.

The latter result in thermosets having good elastic properties, but in practice the relatively high viscosity of the curable compositions is considered to be a problem. Furthermore, compounds of that kind have poor surface qualities, but good surfaces are desirable, especially when such products are used as single-layer coatings.

The aim was therefore to make available new formulation components for curable compositions, with the intention that the formulation components, by virtue of their properties, would also render possible especially the manufacture of elasticised mouldings having good surface properties.

It has now, surprisingly, been found that that aim can be achieved using special novel polyether amine adducts. The present invention accordingly relates to a hydroxyl-group-containing polyether amine adduct a) that is obtainable by the reaction of a polyglycidyl ether a1), prepared from a polyalkylene ether polyol having an average molecular weight Mw of from 200 to 10 000 and epichlorohydrin, with an amine a2) that contains at least two reactive amine hydrogen atoms per molecule, to form a polyether amine, and subsequent addition reaction of that polyether amine with an epoxy compound a3) that contains at least one epoxy group per molecule.

The polyethers according to the invention having terminal amine adducts are obtained by the reaction of prepolymeric glycidyl ethers with amines containing at least two reactive amine hydrogen atoms per molecule, and further addition reaction with epoxy compounds containing at least one epoxy group per molecule. The prepolymeric glycidyl ethers are obtained by the reaction of linear or branched polyalkylene ether polyols, preferably polypropylene oxides, with epichlorohydrin according to known procedures.

The polyalkylene polyether polyols used in accordance with the invention for the preparation of the glycidyl ethers are the commercially customary products obtainable by polymerisation of epoxides, such as ethylene oxide, propylene oxide, butylene oxide, tetrahydrofuran, styrene oxide or epichlorohydrin, for example in the presence of BF₃, or by the addition reaction of such epoxides, where appropriate in admixture or in succession, with initiating components containing reactive hydrogen atoms, such as water, alcohols or amines, such as ethylene glycol, 1,2- or 1,3-propylene glycol, trimethylolpropane, 4,4'-dihydroxydiphenylpropane, aniline, ammonia, ethanolamine or ethylenediamine. Polyethers that contain predominantly primary OH groups (up to 90 % by weight based on all OH groups present in the polyether) are preferred in many cases. Polyethers modified by vinyl polymers, as obtained, for example, by polymerisation of styrene and acrylonitrile in the presence of polyethers (described in, for example, US-A 3 383 351, 3 304 273, 3 523 093, 3 110 695, DE-C 11 52 536) are also suitable, as are OH-group-containing polybutadienes. In addition, polythioethers and polyacetals are suitable. The polyalkylene polyether polyols co-used in accordance with the invention have average molecular weights Mw of from 200 to 10 000, preferably from 400 to 4000, especially from 600 to 3000, more especially from 800 to 2500, preference being given to the use of polypropylene oxides.

To prepare the polyglycidyl ethers, the polyalkylene polyether polyols are reacted according to methods known *per se* in one or more steps with epichlorohydrin in the presence of bases, such as especially NaOH, at temperatures of from 60 to 120°C, where appropriate with the co-use of solvents, water and catalysts; see, for example, DE-A 14 93 849, DE-C 16 43 497, DE-A 24 02 358, DE-C 25 22 745.

The polyglycidyl ethers preferred in accordance with the invention are those based on polypropylene oxide having an epoxy value of approximately from 0.03 to 0.25, preferably from 0.05 to 0.16, epoxy group/100 g of resin.

Amines suitable for co-use are basically any amines that contain at least two reactive amine hydrogen atoms, for example heterocyclic amines, such as piperazine, N-aminoethylpiperazine; cycloaliphatic amines, such as isophorone diamine, 1,2-(1,3-; 1,4-)diaminocyclohexane, aminopropylcyclohexylamine, tricyctododecanediamine (TCD); araliphatic amines, such as xylylenediamine; unsubstituted or substituted aliphatic amines, such as ethylenediamine, propylenediamine, hexamethylenediamine 2,2,4-(2,4,4)-trimethylhexamethylenediamine, 2-methylpentamethylenediamine; ether amines, such as 1,7-diamino-4-oxaheptane, 1,10-diamino-4,7-dioxydecane, 1,14-diamino-4.7,10-trioxatetradecane, 1,20-diamino-4,17-dioxyicosane and especially 1,12-diamino-4,9-dioxadodecane. Higher molecular weight ether diamines based on propoxylated diols, triols and polyols ("Jeffamines" from Texaco) from an average molecular weight of approximately 150 can also be used. In addition, polyalkylene polyamines, such as diethylenetriamine, triethylenetetramine, dipropylenetriamine or tripropylenetetramine, and also high molecular weight amines or addition or condensation products containing free amine hydrogen, can be used. Preference is given to the use of polyethylenepolyamines, for example ethylenediamine, diethylenetriamine or N-aminoethylpiperazine, and cycloaliphatic amines, for example isophorone diamine or aminopropylcyclohexylamine.

It is surprising that adducts of the amino-group-containing compounds with the polyglycidyl ethers can be formed by means of direct addition reaction without the large excesses of amines usually necessary. In accordance with the invention, the mixtures of the glycidyl ethers and amine compounds are formed at room temperature and heated with intensive stirring to a reaction temperature of up to approximately 120°C, preferably of from 100 to 120°C. After about 1 hour, the addition reaction is terminated and the adduct can be used without any further steps. The extent of the addition reaction can be varied within wide limits and is affected by the nature of the amine compound. Positive results are generally always achieved when, following the amine addition reaction, from 1 to 5, preferably 2 or 3, amine hydrogens are available for the further reaction with the epoxy resin.

The epoxy compounds a3) used for the addition reaction of the hydroxyl-group-containing polyether amines are the known and commercially customary products that contain at least one epoxy group per molecule. Preferred in accordance with the invention are glycidyl ethers based on mono- or poly-hydric phenols, such as phenol, cresol, bisphenol A or bisphenol F, mono- or poly-hydric aliphatic alcohols having from 4 to 18 carbon atoms, for example butanol, butanediol, hexanol or hexanediol, fatty alcohols having a chain length of from 8 to 18, preferably from 12 to 14, carbon atoms, polyoxyalkylene glycols, such as diethylene glycol, dipropylene glycol, polyoxypropylene glycols or polyoxyethylene glycols, alkylene glycol alkyl ethers and also epoxy compounds prepared by direct epoxidation, for example styrene oxide. Glycidyl ethers of fatty alcohols having a chain length of from 12 to 14 carbon atoms, and also phenyl- and cresyl-glycidyl ethers, are especially preferred.

The prepolymeric, hydroxyl-group-containing ether amine adducts so obtained are liquids of low viscosity. In addition, they contain virtually no free amines, which are unavoidable in the preparation of epoxide-amine adducts. The adducts according to the invention can be used as formulation components for curable compositions, preferably as curing agents - alone or in admixture with one another or with other amine curing agents customary in the field - for epoxy resins for the manufacture of elastic mouldings, coverings and foamed materials.

The present invention accordingly relates also to a curable composition, comprising an epoxy resin b) having on average more than one epoxy group per molecule, and a hydroxyl-group-containing polyether amine adduct a) that is obtainable by the reaction of a polyglycidyl ether a1), prepared from a polyalkylene ether polyol, preferably a polypropylene ether polyol, having an average molecular weight Mw of from 200 to 10 000, preferably from 400 to 4000, especially from 600 to 3000, more especially from 800 to 2500, and epichlorohydrin, with an amine a2) that contains at least two reactive amine hydrogen atoms per molecule, to form a polyether amine, and subsequent addition reaction of that polyether amine with an epoxy compound a3) that contains at least one epoxy group per molecule as curing agent for the epoxy resin b).

Both the polyether amine adducts themselves and the curable compositions surprisingly have an appreciably lower viscosity that the known polyether urethane amines and the curable compositions prepared therefrom. The surfaces obtained with the curable compositions according to the invention are, after curing, distinguished by a low level of texture-, hydrate- and grease film formation.

The curable compositions may furthermore comprise the additives customary in epoxy resin technology and also other curing agents, especially amine curing agents. Examples of customary amine curing agents include: aliphatic amines, e.g. polyethylenepolyamines and polypropylenepolyamines, e.g. diethylenetriamine and dipropylenetriamine, 2,4,4-(2,2,4-)trimethylhexamethylenediamine; cycloaliphatic diamines, such as 1-amino-3-aminomethyl-3,5,5-trimethyl-cyclohexane, also known as isophorone diamine, 3,3'-dimethyl-4,4'-diaminodicyclohexyl-methane; heterocyclic amines, such as piperazine; long-chain polyether amines, such as 1,12-diamino-4,8-dioxadodecane; aromatic amines, such as phenylenediamine, diamino-diphenyl-methane; polyamidoamines of natural or synthetic fatty acids and polyamines; amine adducts; phenol aldehyde amine condensates.

The hydroxyl-group-containing polyether amine adducts according to the invention can be formulated in known manner with further formulation components, such as viscosity regulators, accelerators - such as tertiary amines, triphenyl phosphite, alkylphenols - or with rapid curing agents, such as Mannich bases.

The co-used epoxy resins b) are hot-curable and cold-curable using the curing agents or curing agent mixtures according to the invention. They contain on average more than one epoxy group per molecule and may be glycidyl ethers of mono- or poly-hydric alcohols, for example glycerol, hydrogenated diphenylolpropane, or of polyhydric phenols, for example resorcinol, diphenylolpropane, or phenol-aldehyde condensation products. It is also possible to use the glycidyl esters of polyvalent carboxylic acids, such as hexahydrophthalic acid or dimerised fatty acids.

Special preference is given to the use of liquid epoxy resins based on epichlorohydrin and diphenylolpropane having epoxy values of from 0.4 to 0.6 epoxy group/100 g of resin.

Where appropriate there may be co-used as reactive diluents also monofunctional aliphatic and aromatic glycidyl ethers, such as butyl glycidyl ether, phenyl glycidyl ether, or glycidyl esters, such as glycidyl acrylate, or epoxides, such as styrene oxide, or polyfunctional, especially low molecular weight, di- or tri-glycidyl ethers.

The combination of the long-chain, lightly crosslinking polyether amines with heavily crosslinking amine formulations makes it possible within a wide range to set the properties of the reaction resin composition in terms of viscosity, reactivity etc.. and the properties of the thermoset in terms of elasticity, crosslink density, mechanical strength, resistance to chemicals.

For the formulation of a reaction resin composition for coating, adhesive bonding or casting there come into consideration customary organic- or mineral-based fillers; pigments; plasticisers; accelerators; solvents and other additives. To produce foamed materials, the blowing agents customary in that field can be used, especially the silane compounds that split off hydrogen.

The compositions according to the invention can be used especially advantageously where there is a requirement for good adhesion to the substrate, good resistance to chemicals and good elasticity for bridging over fissures in the substrate and for relieving internal strain even at relatively low temperatures.

An important field of use is therefore, for example, the fissure-sealing coating of concrete, for example for industrial floors or impermeable safety tanks, e.g. for fuel oil tanks. Owing to their excellent adhesion to iron and concrete and to the variable elasticity, the compositions according to the invention are furthermore suitable as sealing compounds for joints, as adhesives, and as fissure-sealing membranes that are impermeable to liquid. The low-shrinkage and low-stress full-curing also permits the manufacture of large-format moulded articles or mouldings.

The present invention accordingly relates also to a process for the manufacture of mouldings, coverings and foamed materials that comprises using a curable composition according to the invention for the manufacture of mouldings.

### Preparation of the starting materials

### A) Polyglycidyl ethers

A1) There are obtained from 2000 g of polypropylene glycol (molecular weight 2000, OH number 56) (1 mol) and 185 g of epichlorohydrin (2 mol) in accordance with known procedure - addition reaction in the presence of boron trifluoride etherate and ring closure in the presence of aqueous sodium hydroxide solution - approximately 2070 g of a polypropylene glycol diglycidyl ether having the following characteristics: epoxy value: 0.080 epoxy group/100 g of resin; chlorine content (ASTM): 0.1 %; viscosity/25°C: 340 mPa.s measured using a Rotovisko@ (beaker device) according to the manufacturer's directions.

A2) Analogously to Example A1 ), a polyethylene glycol diglycidyl ether is prepared from polyethylene glycol (molecular weight 1065) (1 mol) and 185 g of epichlorohydrin (2 mol): epoxy value: 0.16 epoxy group/100 g of resin; chlorine content in % (ASTM): 0.1; viscosity/25°C: fatty-solid.

A3) Analogously to Example A1), a trifunctional glycidyl ether is prepared from a glycerol/propylene oxide adduct (molecular weight approximately 1500) (1 mol) and 185 g of epichlorohydrin (2 mol): epoxy value: 0.14 epoxy group/100 g of resin; chlorine content (ASTM): 0.1 %; viscosity/25°C: 170 mPa.s.

### B) Preparation of the polyether amines

B1) In a reaction vessel, 727.8 kg (0.583 epoxy equivalent) of the polyglycidyl ether prepared in A1) are placed under nitrogen and 75.2 kg of N-aminoethylpiperazine (NAEP = 0.583 mol) are metered in at room temperature in the course of 1 hour.

After the NAEP addition, heating to an internal temperature of 100°C is carried out in the course of 2.5 hours, after which stirring is carried out at 100°C for 90 minutes. The resulting hydroxyl-group-containing polyether amine has the following characteristics: amine number (mg KOH/g): 112 - 117; colour number according to Gardner: 1 - 2; viscosity/25°C: 2.15 Pa.s.

### C) Preparation of the polyether amine adducts (Example 1)

C1) In a reaction vessel, 137.9 kg (0.05 mol) of the polyether amine B1) are placed under nitrogen. After heating to approximately 100°C, in the course of 30 minutes 10 kg (0.032 epoxy equivalent) of a fatty alcohol glycidyl ether (chain length C₁₂-C₁₄) having an average epoxy value of 0.32 epoxy group/100 g of resin are continuously so added that the temperature does not exceed 120°C. Subsequently, stirring is carried out for 60 minutes at from 100 to 120°C. The resulting product has the following characteristics: amine number (mg KOH/g): 107; colour number according to Gardner: 2; viscosity/25°C: 3.04 Pa.s.

The adducts listed in the following Table 1 are prepared analogously to the above Examples.

**Table 1**

| Example | PGE¹ | Mol PGE | Amine² | Mol amine | Epoxide³ | Mol epoxide | Visc./25°C |
|---|---|---|---|---|---|---|---|
| 2 | A1 | 2 | NAEP | 3 | KGE | 0.50 | 4.1 Pa.s |
| 3 | A3 | 1 | NAEP | 3 | BGE | 0.50 | 4.6 Pa.s |
| 4 | A2 | 1 | NAEP | 2 | BPADGE | 0.30 | solid |
| 5 | A1 | 1 | ED 350 | 2 | BDDGE | 0.75 | 2.0 Pa.s |
| 6 | A1 | 1 | IPD | 2 | HDDGE | 0.75 | 5.2 Pa.s |
| 7 | A2 | 1 | XDA | 2 | FAGE | 1.00 | 1.7 Pa.s |
| 8 | A1 | 1 | DTA | 2 | KGE | 0.50 | 0.9 Pa.s |
| 9 | A3 | 1 | DMAPA | 2 | BPFDGE | 1.00 | 6.1 Pa.s |
| 10 | A1 | 1 | D 230 | 2 | FAGE | 1.50 | 2.4 Pa.s |
| 11 | A2 | 1 | TMD | 2 | TMPTGE | 0.25 | 9.5 Pa.s |
| 12 | A1 | 1 | APCA | 2 | FAGE | 0.30 | 2.7 Pa.s |

| | | | | | | | |
|---|---|---|---|---|---|---|---|
| Key: 1 PGE = polyglycidyl ether | | | | | | | |
| 2 NAEP = aminoethylpiperazine ED 350 = aminoamide of monomeric fatty acid IPD = isophorone diamine XDA = xylylenediamine DTA = diethylenetriamine DMAPA = dimethylaminopropylamine D 230 = polyoxypropylenediamine(Texaco) TMD = trimethyl-hexamethylenediamine APCA = aminopropylcyclohexylamine | | | | | | | |
| 3 KGE = cresyl glycidyl ether BGE = butyl glycidyl ether BPADGE = diglycidyl ether of bisphenol A BDDGE = butanediol diglycidyl ether HDDGE = hexanediol diglycidyl ether PAGE = C₁₂/C₁₄ fatty alcohol glycidyl ether BPFDGE = diglycidyl ether of bisphenol F TMPTGE = trimethylolpropane triglycidyl ether | | | | | | | |

### Application Examples

Example 13: Example of a fissure-sealing membrane that is impermeable to liquid. 51.75 kg of the polyether amine adduct of Example 1), 9.14 kg of trimethyl hexamethylenediamine (mixture of isomers), 9.14 kg of coco fatty amine, 26.3 kg of nonylphenol and 3.25 kg of tris(2,4,4-dimethylaminomethyl)phenol are mixed together and then stirred intensively with 82 kg of a mixture consisting of 86 % diane resin (bisphenol A) having an epoxy value of 0.52 epoxy group/100 g of resin and 14 % long-chain monofunctional reactive diluent based on C₁₂/C₁₄ fatty alcohol having an epoxy value value of 0.33. The mixture is spread in a layer thickness of approximately 3 mm over the concrete surface to be coated. For a pack weighing about 25 kg suitable for use in practice, the processing time is approximately 30 minutes at room temperature.
After about 24 hours at room temperature, the membrane is capable of being used and, after 7 days at room temperature, the following physical values are measured: tensile strength: 7.2 N/mm² (DIN 54455); tear propagation resistance: 16.0 N/mm² (DIN 54455); elongation 98 % (DIN 53507).

After additional thermal ageing at 80°C for 7 days, the following values are measured after cooling to room temperature (23°C/24 hours):
tensile strength: 8.0 N/mm²; tear propagation resistance: 16.0 N/mm²; elongation: 105.
At -10°C, the following values are measured: tensile strength: 25.0 N/mm²; tear propagation resistance: 24.7 N/mm²; elongation: 28 %.

Example 14: Example of a fissure-sealing membrane that is impermeable to liquid.
67.30 kg of the polyether amine adduct of Example 3; 5.69 kg of trimethyl hexamethylenediamine (mixture of isomers); 5.69 kg of coco fatty amine; 16.63 kg of nonylphenol and 4.70 kg of tris(2,4,6-dimethylaminomethyl)phenol are mixed together and then stirred intensively with 82 kg of a mixture consisting of 86 % diane resin (bisphenol A) having an epoxy value of 0.52 epoxy group/100 g of resin and 14 % long-chain monofunctional reactive diluent based on C₁₂/C₁₄- fatty alcohol having an epoxy value of 0.33.

The mixture is spread in a layer thickness of approximately 3 mm over the concrete surface to be coated. For a pack weighing about 25 kg suitable for use in practice, the processing time is approximately 40 minutes at room temperature.
After approximately 24 hours at room temperature, the membrane is capable of being used and, after 7 days at room temperature, the following physical values are measured:
tensile strength: 10.0 N/mm² (DIN 54455); tear propagation resistance: 8.9 N/mm²
(DIN 54455); elongation: 34 % (DIN 53507).
After additional thermal ageing at 80°C for 7 days, the following values are measured after cooling to room temperature (23°C/24 hours):
tensile strength: 6.8 N/mm²; tear propagation resistance: 9.0 N/mm²; elongation: 46 %.
At -10°C, the following values are measured: tensile strength: 16.5 N/mm²; tear propagation resistance: 13.8 N/mm²; elongation: 35 %.

Using the above-mentioned binder formulations it is possible also for filled, elastic floor coverings, sealing compounds and elasticised adhesives as well as elastic epoxy resin/curing agent foamed materials to be produced.

## Claims

1. A hydroxyl-group-containing polyether amine adduct a) that is obtainable by the reaction of a polyglycidyl ether a1), prepared from a polyalkylene ether polyol having an average molecular weight Mw of from 200 to 10 000 and epichlorohydrin, with an amine a2) that contains at least two reactive amine hydrogen atoms per molecule, to form a polyether amine, and subsequent addition reaction of that polyether amine with an epoxy compound a3) that contains at least one epoxy group per molecule.

2. A hydroxyl-group-containing polyether amine adduct according to claim 1, wherein to prepare component a1) a polyalkylene ether polyol, preferably a polypropylene ether polyol, having an average molecular weight Mw of from 400 to 4000, especially from 600 to 3000, more especially from 800 to 2500, is used.

3. A hydroxyl-group-containing polyether amine adduct according to either claim 1 or claim 2, wherein the polyglycidyl ether a1) based on polypropylene oxide has an epoxy value of from 0.03 to 0.25, preferably from 0.05 to 0.16, epoxy group/100 g.

4. A hydroxyl-group-containing polyether amine adduct according to any one of claims 1 to 3, wherein the amine a2) is a polyethylenepolyamine or a cycloaliphatic amine.

5. A hydroxyl-group-containing polyether amine adduct according to any one of claims 1 to 4, wherein the epoxy compound a3) is a glycidyl ether selected from glycidyl ethers of a mono- or poly-hydric phenol, of a mono- or poly-hydric aliphatic alcohol having from 4 to 18 carbon atoms, of a fatty alcohol having a chain length of from 8 to 18 carbon atoms, of a polyoxyalkylene glycol or of an alkylene glycol alkyl ether, or is an epoxy compound prepared by direct epoxidation.

6. A hydroxyl-group-containing polyether amine adduct according to claim 5, wherein the mono- or poly-hydric phenol is phenol, cresol, bisphenol A or bisphenol F, the aliphatic alcohol is butanol, butanediol, hexanol or hexanediol, the fatty alcohol has a chain length of from 12 to 14 carbon atoms, the polyoxyalkylene glycol is diethylene glycol, dipropylene glycol, polyoxypropylene glycol or polyoxyethylene glycol, or the epoxy compound prepared by direct epoxidation is styrene oxide.

7. Use of a hydroxyl-group-containing polyether amine adduct according to any one of claims 1 to 6 as a formulation component for curable compositions.

8. A curable composition comprising
b) an epoxy resin having on average more than one epoxy group per molecule,
a) an adduct according to any one of claims 1 to 6 as curing agent for the epoxy resin b).

9. A curable composition according to claim 8, comprising in addition
c) mineral- or organic-based fillers; pigments; plasticisers; accelerators; solvents; blowing agents and/or other customary curing agents.

10. Use of a curable composition according to claim 8 or claim 9 for the manufacture of mouldings, coverings and foamed materials.

## Patentansprüche

1. Hydroxylgruppenhaltiges Polyetheraminaddukt a), erhältlich durch die Umsetzung eines Polyglycidylethers a1), hergestellt aus einem Polyalkylenetherpolyol mit einem mittleren Molgewicht Mw von 200 bis 10.000 und Epichlorhydrin, mit einem Amin a2), welches mindestens zwei reaktive Aminwasserstoffatome pro Molekül aufweist, zu einem Polyetheramin und anschliessender Adduktierung dieses Polyetheramins mit einer Epoxidverbindung a3) welche mindestens eine Epoxidgruppe pro Molekül aufweist.

2. Hydroxylgruppenhaltiges Polyetheraminaddukt gemäss Anspruch 1, **dadurch gekennzeichnet, dass** zur Herstellung der Komponente a1) ein Polyalkylenetherpolyol, bevorzugt ein Polypropylenetherpolyol, mit einem mittleren Molgewicht Mw von 400 bis 4.000, bevorzugt von 600 bis 3.000, insbesondere bevorzugt von 800 bis 2.500, verwendet wird.

3. Hydroxylgruppenhaltiges Polyetheraminaddukt gemäss einem der Ansprüche 1 oder 2, **dadurch gekennzeichnet, dass** der Polyglycidylether a1) auf Basis von Polypropylenoxid einen Epoxidwert von 0,03 bis 0,25, vorzugsweise von 0,05 bis 0,16 Epoxidgruppen/100g aufweist.

4. Hydroxylgruppenhaltiges Polyetheraminaddukt gemäss einem der Ansprüche 1 bis 3, **dadurch gekennzeichnet, dass** das Amin a2) ein Polyethylenpolyamin oder ein cycloaliphatisches Amin ist.

5. Hydroxylgruppenhaltiges Polyetheraminaddukt gemäss einem der Ansprüche 1 bis 4, **dadurch gekennzeichnet, dass** die Epoxidverbindung a3) ein Glycidylether, ausgewählt aus Glycidylethern eines ein- oder mehrwertigen Phenols, eines ein- oder mehrwertigen aliphatischen Alkohols mit 4 bis 18 C-Atomen, eines Fettalkohols mit einer Kettenlänge von 8-18 C-Atomen, eines Polyoxylalkylenglykols oder eines Alkylenglykolalkylethers ist, oder eine Epoxidverbindung ist, welche durch direkte Epoxidierung hergestellt wird.

6. Hydroxylgruppenhaltiges Polyetheraminaddukt gemäss Anspruch 5, **dadurch gekennzeichnet, dass** das Phenol eines ein- oder mehrwertigen Phenols Phenol, Kresol, Bisphenol A oder Bisphenol F ist, der aliphatische Alkohol Butanol, Butandiol, Hexanol oder Hexandiol ist, der Fettalkohol eine Kettenlänge von 12-14 C-Atomen aufweist, der Polyoxylalkylenglykol Diethylenglykol, Dipropylenglykol, Polyoxypropylenglykol oder Polyoxyethylenglykol ist, oder die Epoxidverbindung, welche durch direkte Epoxidierung hergestellt wird, Styroloxid ist.

7. Verwendung eines hydroxylgruppenhaltiges Polyetheraminadduktes gemäss einem der Ansprüche 1 bis 6 als Formulierungskomponente für härtbare Zusammensetzungen.

8. Härtbare Zusammensetzung enthaltend
b) ein Epoxidharz mit durchschnittlich mehr als einer Epoxidgruppe im Molekül,
a) ein Addukt gemäss einem der Ansprüche 1 bis 6 als Härter für das Epoxidharz b).

9. Härtbare Zusammensetzung gemäss Anspruch 8, zusätzlich enthaltend
c) Füllstoffe auf mineralischer und organischer Basis, Pigmente, Weichmacher, Beschleuniger, Lösemittel, Treibmittel und/oder andere gebräuchliche Härtungsmittel.

10. Verwendung einer härtbaren Zusammensetzung gemäss einem der Ansprüche 8 oder 9 zur Herstellung von Formteilen, Überzügen und Schaumstoffen.

## Revendications

1. Adduit de polyétheramine contenant un groupe hydroxyle a) qui peut être obtenu par la réaction d'un poly(éther glycidylique) a1), préparé à partir d'un poly(éther d'alkylène)polyol ayant une masse moléculaire moyenne Mm allant de 200 à 10 000 et d' épichlorhydrine, avec une amine a2) qui contient au moins deux atomes d'hydrogène réactifs à l'amine par molécule, pour former une polyétheramine, puis la réaction d'addition de cette polyétheramine avec un composé époxy a3) qui contient au moins un groupe époxy par molécule.

2. Adduit de polyétheramine contenant un groupe hydroxyle selon la revendication 1, dans lequel pour préparer le composant a1), un poly(éther d'alkylène)polyol, de préférence un poly(éther de propylène)polyol, ayant une masse moléculaire moyenne Mm allant de 400 à 4 000, en particulier de 600 à 3 000, de manière plus particulièrement préférée de 800 à 2 500, est utilisé.

3. Adduit de polyétheramine contenant un groupe hydroxyle selon la revendication 1 ou 2, dans lequel le poly(éther glycidylique) a1) basé sur un poly(oxyde de propylène) présente un indice époxy allant de 0,03 à 0,25, de préférence de 0,05 à 0,16 groupe époxy/100 g.

4. Adduit de polyétheramine contenant un groupe hydroxyle selon l'une quelconque des revendications 1 à 3, dans lequel l'amine a2) est un polyéthylènepolyamine ou une amine cycloaliphatique.

5. Adduit de polyétheramine contenant un groupe hydroxyle selon l'une quelconque des revendications 1 à 4, dans lequel le composé époxy a3) est un éther glycidylique choisi parmi les éthers glycidyliques d'un mono- ou polyphénol, d'un mono- ou polyalcool aliphatique ayant de 4 à 18 atomes de carbone, d'un alcool gras ayant une longueur de chaîne allant de 8 à 18 atomes de carbone, d'un polyoxyalkylèneglycol ou d'un éther alkylique d'alkylèneglycol, ou est un composé époxyde préparé par époxydation directe.

6. Adduit de polyétheramine contenant un groupe hydroxyle selon la revendication 5, dans lequel le mono- ou polyphénol est le phénol, le crésol, le bisphénol A ou le bisphénol F, l'alcool aliphatique est le butanol, le butanediol, l'hexanol ou l'hexanediol, l'alcool gras a une longueur de chaîne allant de 12 à 14 atomes de carbone, le polyoxyalkylèneglycol est le diéthylèneglycol, le dipropylèneglycol, le polyoxypropylèneglycol ou le polyoxyéthylèneglycol, ou le composé époxyde préparé par époxydation directe est l'oxyde de styrène.

7. Utilisation d'un adduit de polyétheramine contenant un groupe hydroxyle selon l'une quelconque des revendications 1 à 6, en tant que composant de formulation pour des compositions durcissables.

8. Composition durcissable comprenant :
b) une résine époxy ayant en moyenne plus d'un groupe époxy par molécule,
a) un adduit selon l'une quelconque des revendications 1 à 6 en tant qu'agent durcissant pour la résine époxy b).

9. Composition durcissable selon la revendication 8, comprenant de plus :
c) des charges minérales ou organiques ; des pigments ; des plastifiants ; des accélérateurs ; des solvants ; des agents d'expansion et/ou d'autres agents durcissants courants.

10. Utilisation d'une composition durcissable selon la revendication 8 ou 9, pour la fabrication de moulages, de revêtement et de matières plastiques expansées.
